# FASCICULE DE BREVET EUROPEEN

(11) **EP 3 992 476 B1**
(45) Date de publication et mention de la délivrance du brevet: **28.08.2024**
(21) Numéro de dépôt: 21204157.8
(22) Date de dépôt: 22.10.2021
(51) Int. Cl.: F16B 13/04, E04B 1/76, F16B 13/14

(54) **ENTRETOISE ET KIT DE FIXATION POUR PAREMENT EXTÉRIEUR**
ABSTANDSHALTER UND BEFESTIGUNGSKIT FÜR AUSSENVERKLEIDUNGEN
SPACER AND FASTENING KIT FOR EXTERNAL FACING

(30) Priorité: 02.11.2020 FR 2011215
(43) Date de publication de la demande: 04.05.2022
(73) Titulaire: A. RAYMOND ET CIE, 38000 Grenoble (FR)
(72) Inventeur: BIZZINI, Olivier, 38950 Quaix en Chartreuse (FR)
(74) Mandataire: Germain Maureau

(56) Documents cités:
- EP-A1- 0 810 378
- EP-A1- 2 785 927
- EP-A2- 2 672 129
- EP-B1- 2 785 927
- WO-A1-2009/047138

## Description

### Domaine technique de l'invention

La présente invention concerne une entretoise pour kit de fixation adapté à la fixation d'un parement extérieur sur un élément de construction externe d'un bâtiment.

L'invention concerne aussi un kit de fixation comprenant une telle entretoise.

### Etat de la technique

L'aménagement d'un bâtiment à isolation extérieure nécessite l'adjonction de différents éléments ayant chacun une fonction propre. Ces éléments peuvent notamment comporter une partie structurelle responsable de la tenue mécanique, une partie isolante contribuant à la résistance thermique, et une partie de parement. Que ce soit à l'intérieur ou à l'extérieur du bâtiment, ces différentes parties doivent être solidarisées.

Il est connu de l'état de la technique d'utiliser une tige filetée traversant ces différents éléments, et venant s'ancrer dans la paroi murale. De manière générale, l'insertion de la tige filetée est réalisée suite à un perçage de la paroi murale, suivi d'une fixation primaire de la tige au niveau de celle-ci. La fixation primaire de la tige au niveau de la paroi murale peut notamment être réalisée par l'adjonction d'un matériau durcissant. Cette solution donne satisfaction en ce qu'elle permet de fixer chaque élément avec les autres pour obtenir un ensemble solidaire.

Cependant, le perçage de l'élément d'isolation provoque généralement une rupture de l'isolation au niveau du passage traversant, conduisant à la création d'un ou plusieurs ponts thermiques, fragilisant de ce fait l'isolation générale du bâtiment.

Par ailleurs, lors de l'assemblage des différents éléments, et en particulier dans l'intervalle temporel nécessaire au durcissement du matériau durcissant, les différentes parties doivent être maintenue en position. Cela peut engendrer des difficultés d'assemblage pour les opérateurs, et/ou la mobilisation d'un engin de construction en position pendant la durée de l'assemblage.

Le document EP 2785927 A1 divulgue un dispositif d'entretoise pour un dispositif de fixation d'un objet sur un mur habillé avec une couche d'isolation selon l'art antérieur.

### Objet de l'invention

La présente invention a pour but de proposer une solution qui réponde à tout ou partie des problèmes précités.

Ce but peut être atteint grâce à la mise en oeuvre d'une entretoise pour kit de fixation adapté à la fixation d'un parement extérieur sur un élément de construction externe d'un bâtiment où le parement extérieur comprend un élément de parement externe et un élément d'isolation destiné à être positionné, après fixation, entre l'élément de parement externe et l'élément de construction externe du bâtiment, ladite entretoise étant destinée à traverser l'épaisseur de l'élément d'isolation et comprenant :
- un corps principal de forme tubulaire s'étendant suivant une direction axiale,
- une première paroi d'extrémité agencée à une première extrémité axiale du corps principal et destinée à être tournée vers l'élément de construction externe du bâtiment, la première paroi d'extrémité s'étendant transversalement à la direction axiale et délimitant une surface d'appui destinée à coopérer avec une encoche délimitée par l'élément d'isolation,
- une deuxième paroi d'extrémité agencée à une deuxième extrémité axiale du corps principal, opposée à la première extrémité axiale, et destinée à prendre appui contre l'élément de parement externe,
- un canal de guidage s'étendant intérieurement suivant la direction axiale à travers le corps principal et débouchant vers l'extérieur de l'entretoise au niveau de la première paroi d'extrémité et au niveau de la deuxième paroi d'extrémité, le passage traversant permettant l'insertion d'une tige de solidarisation,
- au moins une collerette transversale s'étendant à l'extérieur du corps principal transversalement à la direction axiale, à un emplacement situé entre la première paroi d'extrémité et la deuxième paroi d'extrémité, au moins deux cavités externes étant délimitées, en combinaison avec le corps principal, de part et d'autre de ladite au moins une collerette transversale.

Les dispositions précédemment décrites permettent de proposer une entretoise facilitant la solidarisation du parement extérieur avec l'élément de construction externe du bâtiment par l'intermédiaire du canal de guidage et la rupture de pont thermique par conduction et convection par l'intermédiaire à la fois du corps principal mais également des cavités externes et de l'au moins une collerette transversale. De manière synergique, la présence du canal de guidage de l'entretoise permet de faciliter le perçage et la position du perçage de l'élément de construction externe avant la fixation du parement extérieur sur l'élément de construction externe.

L'entretoise peut en outre présenter une ou plusieurs des caractéristiques suivantes, prises seules ou en combinaison.

Selon un mode de réalisation, l'entretoise est réalisée dans un matériau polymère.

De manière générale, le matériau utilisé peut présenter un faible taux de fluage en compression.

Selon un mode de réalisation, l'entretoise est réalisée par un procédé d'injection plastique, ou par une extrusion.

Selon un mode de réalisation, l'entretoise présente une géométrie de révolution autour de la direction axiale, notamment une géométrie cylindrique ou tronconique.

Selon un mode de réalisation, ladite au moins une collerette transversale s'étend dans un plan sensiblement perpendiculaire à la direction axiale.

Selon un mode de réalisation ladite au moins une collerette transversale est de forme annulaire.

Selon un mode de réalisation, ladite au moins une collerette transversale présente une forme générale de paroi.

Selon un mode de réalisation, le nombre de collerettes transversales est supérieur ou égal à 2, et notamment supérieur ou égal à 6.

De manière avantageuse, un nombre de collerettes transversales supérieur ou égal à deux permet d'augmenter le nombre de cavités externes, permettant de cette manière d'améliorer la fonction d'isolation thermique de l'entretoise. Par ailleurs, un nombre de cavités externes supérieur ou égal à 6 permet d'assurer une isolation thermique optimale.

Selon un mode de réalisation, les collerettes transversales sont décalées les unes des autres le long de la direction axiale suivant un pas constant le long de l'entretoise.

Selon un mode de réalisation, l'entretoise comprend au moins une nervure longitudinale s'étendant, à l'extérieur du corps principal et suivant la direction axiale, entre la première paroi d'extrémité et la deuxième paroi d'extrémité, ladite nervure longitudinale assurant une liaison mécanique entre la première paroi d'extrémité, la deuxième paroi d'extrémité et l'au moins une collerette transversale.

Selon un mode de réalisation, ladite au moins une nervure longitudinale présente une forme générale de paroi.

Selon un mode de réalisation, chaque intersection entre une nervure longitudinale, une collerette transversale, la première paroi d'extrémité, ou la deuxième paroi d'extrémité peut être renforcée, de manière à éviter la génération de zones à concentration de contrainte, et de manière à augmenter l'étanchéité de chaque cavité externe.

Selon un mode de réalisation, l'entretoise comprend une pluralité de nervures longitudinales décalées angulairement entre elles autour de la direction axiale.

De manière avantageuse, la présence d'au moins une nervure longitudinale permet d'augmenter la résistance mécanique de l'entretoise, notamment en terme de résistance à la compression axiale, à la torsion, à la flexion.

Selon un mode de réalisation, les cavités externes délimitées par la première paroi d'extrémité, la deuxième paroi d'extrémité, l'au moins une nervure longitudinale, et l'au moins une collerette transversale contiennent au moins partiellement un isolant thermique.

Selon un mode de réalisation, l'isolant thermique est l'air.

Selon un mode de réalisation, l'isolant thermique est un matériau isolant appartenant au groupe comprenant une laine minérale, un polymère, une fibre de cellulose, une mousse de ciment, de la laine de bois, ou équivalent.

Selon un mode de réalisation la première paroi d'extrémité présente un disque externe s'étendant perpendiculairement à la direction axiale, ledit disque étant destiné à venir s'appuyer axialement contre l'encoche circulaire de l'élément d'isolation de manière à bloquer axialement l'entretoise après son insertion axiale à travers l'épaisseur de l'élément d'isolation.

Selon un mode de réalisation, la deuxième paroi d'extrémité comprend au moins une lumière permettant la mise en place d'un organe de fixation destiné à assurer la fixation de la deuxième paroi d'extrémité avec l'élément de parement externe.

Le but de l'invention peut également être atteint grâce à la mise en oeuvre d'un kit de fixation adapté à la fixation d'un parement extérieur sur un élément de construction externe d'un bâtiment où le parement extérieur comprend un élément de parement externe et un élément d'isolation destiné à être positionné, après fixation par l'intermédiaire dudit kit de fixation, entre l'élément de parement externe et l'élément de construction externe du bâtiment, ledit kit de fixation comprenant une entretoise du type d'un de celles décrites précédemment, et une tige de solidarisation configurée pour s'insérer axialement dans le canal de guidage et dans un orifice ménagé dans l'élément de construction externe du bâtiment, de manière à lier mécaniquement le parement extérieur et l'élément de construction externe du bâtiment.

Le kit de fixation peut en outre présenter une ou plusieurs des caractéristiques suivantes, prises seules ou en combinaison.

Selon un mode de réalisation, le kit de fixation comprend au moins un organe de fixation apte à fixer la deuxième paroi d'extrémité de l'entretoise avec l'élément de parement externe.

Selon un mode de réalisation, l'organe de fixation comprend une vis ou un rivet venant se fixer sur l'élément de parement externe, par exemple par l'intermédiaire d'un insert solidaire de l'élément de parement externe.

Selon un mode de réalisation, l'organe de fixation comprend un élément d'appui, la deuxième paroi d'extrémité de l'entretoise prenant appui sur ledit élément d'appui suivant la direction axiale. Par exemple l'élément d'appui peut comprendre une languette recourbée, la deuxième paroi d'extrémité de l'entretoise étant configurée pour s'insérer dans la languette recourbée, notamment par rotation d'un quart de tour. De manière avantageuse, la présence de l'élément d'appui permet de répartir la pression de contact lorsque la deuxième paroi d'extrémité de l'entretoise est fixée avec l'élément de parement externe.

Selon un mode de réalisation, la deuxième paroi d'extrémité de l'entretoise présente une forme de générale de croix et l'élément d'appui présente une rainure dans laquelle la deuxième paroi d'extrémité s'insère, notamment par rotation d'un quart de tour. De cette manière, l'entretoise permet de solidariser l'élément d'isolation avec l'élément de parement, par l'intermédiaire de l'élément d'appui.

Selon un mode de réalisation, la tige de solidarisation comprend une première extrémité munie d'une cheville de maintien ; le kit de fixation étant apte à adopter une première configuration dans laquelle la cheville de maintien coopère par simple emboîtement avec l'orifice ménagé dans l'élément de construction externe du bâtiment, et une deuxième configuration dans laquelle la tige de solidarisation est solidaire de l'élément de construction externe du bâtiment par l'intermédiaire d'un adhésif.

Selon un mode de réalisation, l'adhésif est une résine durcissable.

Selon un mode de réalisation, la cheville de maintien est constituée d'un matériau polymère. De manière générale, le matériau utilisé peut présenter un faible taux de fluage en compression.

Selon un mode de réalisation, la cheville de maintien est réalisée par un procédé d'injection plastique, ou par une extrusion.

Selon un mode de réalisation, la cheville de maintien comprend un corps tubulaire s'étendant suivant une direction longitudinale et présentant sur une surface externe d'au moins une fraction de la longueur du corps tubulaire, au moins une ailette transversale s'étendant transversalement à la direction longitudinale et apte à interagir par frottement avec une paroi intérieure de l'orifice ménagé dans l'élément de construction externe du bâtiment.

Selon un mode de réalisation, l'au moins une ailette transversale comprend une encoche configurée pour permettre le passage d'un fluide de part et d'autre de ladite au moins une ailette transversale à l'extérieur du corps tubulaire de la cheville de maintien.

Selon un mode de réalisation, ledit fluide comprend de l'air. De cette manière, l'encoche contribue à permettre l'évacuation de l'air éventuellement présent dans l'orifice ménagé dans l'élément de construction externe du bâtiment lorsque la tige de solidarisation est insérée dans ledit orifice. De manière avantageuse, l'évacuation de l'air permet d'empêcher le risque de surpression lors du montage du kit de fixation.

Selon un mode de réalisation, ledit fluide comprend l'adhésif destiné à solidariser la tige de solidarisation avec l'élément de construction externe du bâtiment. Dans ce cas, l'encoche permet d'évacuer l'éventuel surplus d'adhésif utilisé.

Selon un mode de réalisation, le corps tubulaire de la cheville de maintien comprend une portion d'extrémité d'insertion présentant une forme tronconique configurée pour guider le passage de la tige de solidarisation dans le corps tubulaire de la cheville de maintien.

Selon un mode de réalisation, la forme tronconique de la portion d'extrémité d'insertion est configurée pour améliorer la tenue en cisaillement du parement extérieur vis-à-vis de l'élément de construction externe.

Selon un mode de réalisation, une surface interne du corps tubulaire de la cheville de maintien comprend des rainures longitudinales s'étendant axialement à l'intérieur du corps tubulaire, et définissant entre elles des canaux internes.

Selon un mode de réalisation, les rainures longitudinales sont configurées pour être au moins partiellement écrasées lors de l'insertion de la tige de solidarisation à l'intérieur de la cheville de maintien de manière à assurer un serrage de la tige de solidarisation, tout en conservant une conformation externe de la cheville de maintien intacte.

Selon un mode de réalisation, la cheville de maintien comprend au moins un canal de passage configuré pour permettre le passage du fluide de l'intérieur vers l'extérieur de la cheville de maintien et réciproquement.

Selon un mode de réalisation, le canal de passage est ménagé dans le corps tubulaire au niveau de la portion d'extrémité d'insertion.

Selon un mode de réalisation, la tige de solidarisation présente une deuxième extrémité opposée à la première extrémité, filetée et sur laquelle un écrou est vissé jusqu'à prendre appui contre la deuxième paroi d'extrémité de l'entretoise ou contre l'élément d'appui, de manière à appuyer l'élément d'isolation sur l'élément de construction externe du bâtiment, le kit de fixation étant dans la deuxième configuration.

### Description sommaire des dessins

D'autres aspects, buts, avantages et caractéristiques de l'invention apparaîtront mieux à la lecture de la description détaillée suivante de modes de réalisation préférés de celle-ci, donnée à titre d'exemple non limitatif, et faite en référence aux dessins annexés sur lesquels :
[Fig. 1] La figure 1 est une vue schématique de profil d'un parement extérieur présentant 4 kits de fixation selon un mode de réalisation particulier de l'invention.
[Fig. 2] La figure 2 est une vue schématique en coupe d'un kit de fixation selon un mode de réalisation particulier de l'invention.
[Fig. 3] La figure 3 est une vue schématique de profil d'une cheville de maintien selon un mode de réalisation particulier de l'invention.
[Fig. 4] La figure 4 est une vue schématique de profil d'une entretoise selon un mode de réalisation particulier de l'invention.

### Description détaillée

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux.

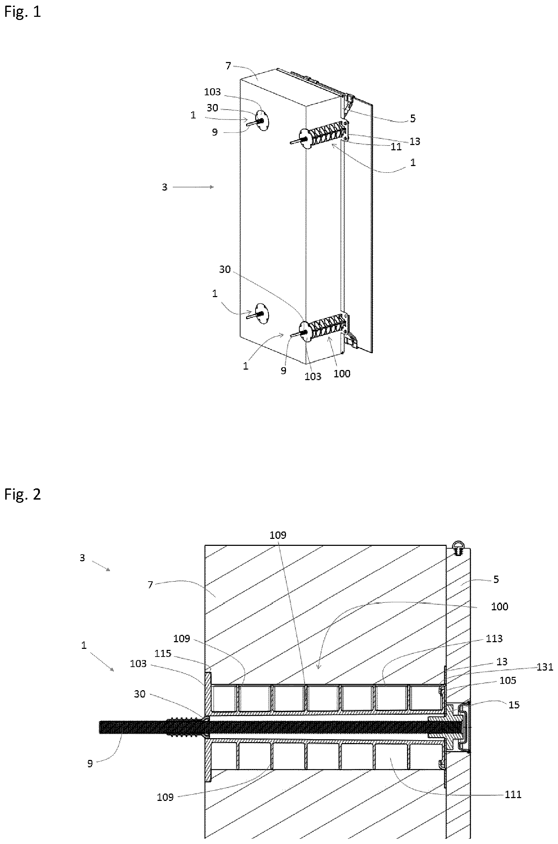

Comme illustré sur les figures 1 et 2, l'invention concerne une entretoise 100 pour kit de fixation 1, et concerne également ledit kit de fixation 1 adapté à la fixation d'un parement extérieur 3 sur un élément de construction externe d'un bâtiment. Le parement extérieur 3 comprend un élément de parement 5 externe et un élément d'isolation 7 destiné à être positionné, après fixation par l'intermédiaire dudit kit de fixation 1, entre l'élément de parement 5 externe et l'élément de construction externe du bâtiment.

Le kit de fixation 1 comprend notamment l'entretoise 100 selon l'un des modes de réalisation détaillés ci-après, et une tige de solidarisation 9 configurée pour s'insérer axialement dans un canal de guidage 107 de l'entretoise 100 et dans un orifice ménagé dans l'élément de construction externe du bâtiment, de manière à lier mécaniquement le parement extérieur 3 et l'élément de construction externe du bâtiment. La figure 1 illustre notamment un mode de réalisation dans lequel quatre kits de fixation 1 sont utilisés pour fixer le parement extérieur 3 à l'élément de construction externe d'un bâtiment.

Selon les variantes non limitatives représentées sur les figures 1 et 2, la tige de solidarisation 9 comprend une première extrémité munie d'une cheville de maintien 30. Dans ce cas, le kit de fixation 1 est apte à adopter une première configuration dans laquelle la cheville de maintien 30 coopère par simple emboîtement avec l'orifice ménagé dans l'élément de construction externe du bâtiment, et une deuxième configuration dans laquelle la tige de solidarisation 9 est solidaire de l'élément de construction externe du bâtiment par l'intermédiaire d'un adhésif. Par exemple, l'adhésif peut être une résine durcissable. La tige de solidarisation 9 peut par ailleurs présenter une deuxième extrémité opposée à la première extrémité, filetée et sur laquelle un écrou 15 est vissé jusqu'à prendre appui contre l'entretoise 100 au niveau d'une deuxième paroi d'extrémité 105, ou contre un élément d'appui 13 de manière à appuyer l'élément d'isolation 7 sur l'élément de construction externe du bâtiment, lorsque le kit de fixation 1 est dans la deuxième configuration.

Selon un mode de réalisation, le kit de fixation 1 comprend au moins un organe de fixation 11 apte à fixer la deuxième paroi d'extrémité 105 de l'entretoise 100 avec l'élément de parement 5 externe. Selon une première variante non limitative représentée sur la figure 1, la deuxième paroi d'extrémité 105 comprend au moins une lumière permettant la mise en place de l'organe de fixation 11 destiné à assurer la fixation de la deuxième paroi d'extrémité 105 avec l'élément de parement 5 externe. L'organe de fixation 11 peut notamment comprendre une vis ou un rivet venant se fixer sur l'élément de parement 5 externe, par exemple par l'intermédiaire d'un insert solidaire de l'élément de parement 5 externe. Selon une deuxième variante non limitative représentée sur la figure 2, l'organe de fixation 11 comprend un élément d'appui 13, la deuxième paroi d'extrémité 105 de l'entretoise 100 prenant appui sur ledit élément d'appui 13 suivant la direction axiale. De manière avantageuse, la présence de l'élément d'appui 13 permet de répartir la pression de contact lorsque la deuxième paroi d'extrémité 105 de l'entretoise 100 est fixée avec l'élément de parement 5 externe. Par exemple l'élément d'appui 13 peut comprendre une languette recourbée 131, la deuxième paroi d'extrémité 105 de l'entretoise 100 étant configurée pour s'insérer dans la languette recourbée 131, notamment par rotation d'un quart de tour. Selon une troisième variante, la deuxième paroi d'extrémité 105 de l'entretoise 100 présente une forme de générale de croix et l'élément d'appui 13 présente une rainure dans laquelle la deuxième paroi d'extrémité 105 s'insère, notamment par rotation d'un quart de tour. De cette manière, l'entretoise 100 permet de solidariser l'élément d'isolation 7 avec l'élément de parement 5, par l'intermédiaire de l'élément d'appui 13.

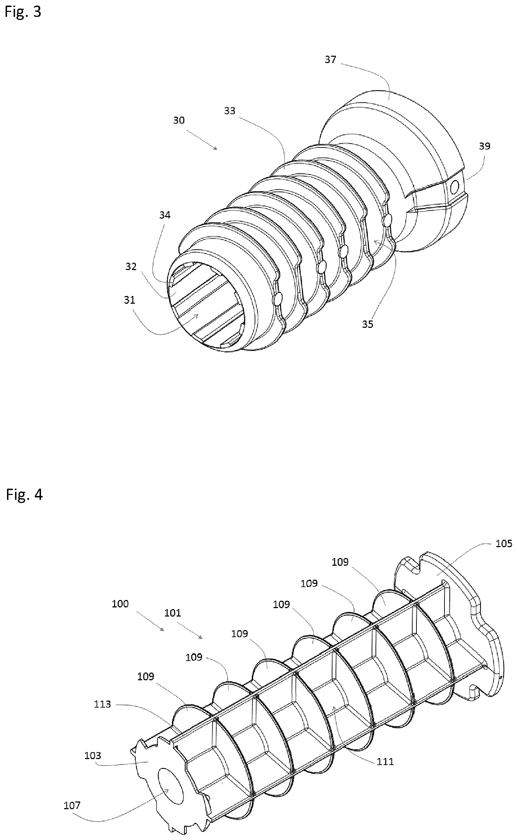

Comme indiqué précédemment, le kit de fixation 1 peut comprendre une cheville de maintien 30 dont un mode de réalisation particulier est présenté sur la figure 3. Selon ce mode de réalisation, la cheville de maintien 30 comprend un corps tubulaire 31 s'étendant suivant une direction longitudinale et présentant sur une surface externe d'au moins une fraction de la longueur du corps tubulaire 31. Le corps tubulaire 31 de la cheville de maintien 30 peut comprendre une portion d'extrémité d'insertion 37 présentant une forme tronconique configurée pour guider le passage de la tige de solidarisation 9 dans le corps tubulaire 31 de la cheville de maintien 30. De manière avantageuse, la forme tronconique de la portion d'extrémité d'insertion 37 est configurée pour améliorer la tenue en cisaillement du parement extérieur 3 vis-à-vis de l'élément de construction externe. Le corps tubulaire 31 de la cheville de maintien 30 peut par ailleurs présenter une surface interne comprenant des rainures longitudinales 34 s'étendant axialement à l'intérieur du corps tubulaire 31, et définissant entre elles des canaux internes 32. Les rainures longitudinales 34 peuvent alors être configurées pour être au moins partiellement écrasées lors de l'insertion de la tige de solidarisation 9 à l'intérieur du corps tubulaire 31 de la cheville de maintien 30 de manière à assurer un serrage de la tige de solidarisation 9, tout en conservant une conformation externe de la cheville de maintien 30 intacte.

Selon un mode de réalisation, la cheville de maintien 30 est constituée d'un matériau polymère. De manière générale, le matériau utilisé peut présenter un faible taux de fluage en compression.

Selon un mode de réalisation, la cheville de maintien 30 est réalisée par un procédé d'injection plastique, ou par une extrusion.

De manière avantageuse, la cheville de maintien 30 peut comprendre au moins un canal de passage 39 configuré pour permettre le passage du fluide de l'intérieur vers l'extérieur de la cheville de maintien 30 et réciproquement. Par exemple, le canal de passage 39 est ménagé dans le corps tubulaire 31 au niveau de la portion d'extrémité d'insertion 37.

La cheville de maintien 30 peut également comprendre au moins une ailette transversale 33 s'étendant transversalement à la direction longitudinale et apte à interagir par frottement avec une paroi intérieure de l'orifice ménagé dans l'élément de construction externe du bâtiment. Chaque ailette transversale 33 peut comprendre une encoche 35 configurée pour permettre le passage du fluide de part et d'autre de ladite au moins une ailette transversale 33 à l'extérieur du corps tubulaire 31 de la cheville de maintien 30. La figure 3 illustre notamment un mode de réalisation pour lequel la cheville de maintien comprend six ailettes transversales 33 comprenant chacune une encoche 35 configurée pour permettre le passage du fluide.

Selon un mode de réalisation, ledit fluide comprend de l'air. De cette manière, l'encoche 35 contribue à permettre l'évacuation de l'air éventuellement présent dans l'orifice ménagé dans l'élément de construction externe du bâtiment lorsque la tige de solidarisation 9 est insérée dans ledit orifice. De manière avantageuse, l'évacuation de l'air permet d'empêcher le risque de surpression lors du montage du kit de fixation 1.

Selon un mode de réalisation, ledit fluide comprend l'adhésif destiné à solidariser la tige de solidarisation 9 avec l'élément de construction externe du bâtiment. Dans ce cas, l'encoche 35 permet d'évacuer l'éventuel surplus d'adhésif utilisé.

En référence à la figure 4, et comme indiqué précédemment, l'invention concerne également l'entretoise 100 pour kit de fixation 1 adapté à la fixation d'un parement extérieur 3 sur un élément de construction externe d'un bâtiment où le parement extérieur 3 comprend un élément de parement 5 externe et un élément d'isolation 7 destiné à être positionné, après fixation, entre l'élément de parement 5 externe et l'élément de construction externe du bâtiment, ladite entretoise 100 étant destinée à traverser l'épaisseur de l'élément d'isolation 7. Par exemple, l'entretoise 100 peut être réalisée dans un matériau polymère. De manière générale, le matériau utilisé peut présenter un faible taux de fluage en compression.

Selon un mode de réalisation, l'entretoise 100 est réalisée par un procédé d'injection plastique, ou par une extrusion.

Selon une variante non limitative, l'entretoise 100 présente une géométrie de révolution autour d'une direction axiale, notamment une géométrie cylindrique ou tronconique. L'entretoise 100 comprend notamment un corps principal 101 de forme tubulaire s'étendant suivant la direction axiale, et une première paroi d'extrémité 103 agencée à une première extrémité axiale du corps principal 101 et destinée à être tournée vers l'élément de construction externe du bâtiment. La première paroi d'extrémité 103 s'étend transversalement à la direction axiale et délimite une surface d'appui destinée à coopérer avec une encoche circulaire 115 délimitée par l'élément d'isolation 7. Par exemple, la première paroi d'extrémité 103 peut présenter un disque externe s'étendant perpendiculairement à la direction axiale, ledit disque étant destiné à venir s'appuyer axialement contre l'encoche circulaire 115 de l'élément d'isolation 7 de manière à bloquer axialement l'entretoise 100 après son insertion axiale à travers l'épaisseur de l'élément d'isolation 7.

L'entretoise comprend en outre une deuxième paroi d'extrémité 105 agencée à une deuxième extrémité axiale du corps principal 101, opposée à la première extrémité axiale, et destinée à prendre appui contre l'élément de parement 5 externe. Un canal de guidage 107 s'étend intérieurement suivant la direction axiale à travers le corps principal 101 et débouche vers l'extérieur de l'entretoise 100 au niveau de la première paroi d'extrémité 103 et au niveau de la deuxième paroi d'extrémité 105. Le passage traversant le canal de guidage 107 permet notamment l'insertion de la tige de solidarisation 9.

L'entretoise 100 comprend par ailleurs au moins une collerette transversale 109 s'étendant à l'extérieur du corps principal 101 transversalement à la direction axiale, à un emplacement situé entre la première paroi d'extrémité 103 et la deuxième paroi d'extrémité 105. Le nombre de collerettes transversales 109 peut être supérieur ou égal à 2, et notamment supérieur ou égal à 6. La figure 4 illustre une variante dans laquelle l'entretoise 100 comprend six collerettes transversales 109.

Selon un mode de réalisation, la ou les collerettes transversales 109 s'étendent dans un plan sensiblement perpendiculaire à la direction axiale. Par exemple, les collerettes transversales 109 peuvent être décalées les unes des autres le long de la direction axiale suivant un pas constant le long de l'entretoise 100.

Selon une variante non limitative représentée sur la figure 4, chaque collerette transversale 109 est de forme annulaire.

En outre, au moins deux cavités externes 111 sont délimitées, en combinaison avec le corps principal 101, de part et d'autre de ladite au moins une collerette transversale 109.

Selon une variante non limitative, l'entretoise 100 comprend au moins une nervure longitudinale 113 s'étendant, à l'extérieur du corps principal 101 et suivant la direction axiale, entre la première paroi d'extrémité 103 et la deuxième paroi d'extrémité 105. Ladite nervure longitudinale 113 peut donc assurer une liaison mécanique entre la première paroi d'extrémité 103, la deuxième paroi d'extrémité 105 et l'au moins une collerette transversale 109. De manière avantageuse, la présence d'au moins une nervure longitudinale 113 permet d'augmenter la résistance mécanique de l'entretoise 100, notamment en terme de résistance à la compression axiale, à la torsion, à la flexion. Par ailleurs, et comme représenté sur la figure 4, chaque intersection entre une nervure longitudinale 113, une collerette transversale 109, la première paroi d'extrémité 103, ou la deuxième paroi d'extrémité 105 peut être renforcée, de manière à éviter la génération de zones à concentration de contrainte, et de manière à augmenter l'étanchéité de chaque cavité externe 111. L'entretoise 100 peut comprendre une pluralité de nervures longitudinales 113 décalées angulairement entre elles autour de la direction axiale. Dans ce cas, les cavités externes 111 peuvent être délimitées par la première paroi d'extrémité 103, la deuxième paroi d'extrémité 105, l'au moins une nervure longitudinale 113, et l'au moins une collerette transversale 109. Le mode de réalisation illustré sur la figure 4 présente notamment une entretoise 100 comprenant six collerettes transversales 109, et quatre nervures longitudinales 113, délimitant avec la première paroi d'extrémité 103 et la deuxième paroi d'extrémité 105, vingt-huit cavités externes 111.

Selon un mode de réalisation, les cavités externes 111 contiennent au moins partiellement un isolant thermique. Selon un mode de réalisation, l'isolant thermique est l'air. Selon un mode de réalisation, l'isolant thermique est un matériau isolant appartenant au groupe comprenant une laine minérale, un polymère, une fibre de cellulose, une mousse de ciment, de la laine de bois, ou équivalent.

Les dispositions précédemment décrites permettent de proposer une entretoise 100, et un kit de fixation 1 facilitant la solidarisation du parement extérieur 3 avec l'élément de construction externe du bâtiment par l'intermédiaire du canal de guidage 107, et la rupture de pont thermique par conduction et convection par l'intermédiaire à la fois du corps principal 101 mais également des cavités externes 111 et de l'au moins une collerette transversale 109. De manière synergique, la présence du canal de guidage 107 de l'entretoise 100 permet de faciliter le perçage et la position du perçage de l'élément de construction externe avant la fixation du parement extérieur 3 sur l'élément de construction externe.

## Revendications

1. Entretoise (100) pour kit de fixation (1) adapté à la fixation d'un parement extérieur (3) sur un élément de construction externe d'un bâtiment où le parement extérieur (3) comprend un élément de parement (5) externe et un élément d'isolation (7) destiné à être positionné, après fixation, entre l'élément de parement (5) externe et l'élément de construction externe du bâtiment, ladite entretoise (100) étant destinée à traverser l'épaisseur de l'élément d'isolation (7) et comprenant :
- un corps principal (101) de forme tubulaire s'étendant suivant une direction axiale,
- une première paroi d'extrémité (103) agencée à une première extrémité axiale du corps principal (101) et destinée à être tournée vers l'élément de construction externe du bâtiment, la première paroi d'extrémité (103) s'étendant transversalement à la direction axiale et délimitant une surface d'appui destinée à coopérer avec une encoche délimitée par l'élément d'isolation (7),
- une deuxième paroi d'extrémité (105) agencée à une deuxième extrémité axiale du corps principal (101), opposée à la première extrémité axiale, et destinée à prendre appui contre l'élément de parement (5) externe,
- un canal de guidage (107) s'étendant intérieurement suivant la direction axiale à travers le corps principal (101) et débouchant vers l'extérieur de l'entretoise (100) au niveau de la première paroi d'extrémité (103) et au niveau de la deuxième paroi d'extrémité (105), le passage traversant permettant l'insertion d'une tige de solidarisation (9),
- au moins une collerette transversale (109) s'étendant à l'extérieur du corps principal (101) transversalement à la direction axiale, à un emplacement situé entre la première paroi d'extrémité (103) et la deuxième paroi d'extrémité (105), au moins deux cavités externes (111) étant délimitées, en combinaison avec le corps principal (101), de part et d'autre de ladite au moins une collerette transversale (109).

2. Entretoise (100) selon la revendication 1, présentant une géométrie de révolution autour de la direction axiale, notamment une géométrie cylindrique ou tronconique.

3. Entretoise (100) selon l'une quelconque des revendications 1 ou 2, dans laquelle ladite au moins une collerette transversale (109) s'étend dans un plan sensiblement perpendiculaire à la direction axiale.

4. Entretoise (100) selon l'une quelconque des revendications 1 à 3, dans laquelle le nombre de collerettes transversales (109) est supérieur ou égal à 2, et notamment supérieur ou égal à 6.

5. Entretoise (100) selon l'une quelconque des revendications 1 à 4, comprenant au moins une nervure longitudinale (113) s'étendant, à l'extérieur du corps principal (101) et suivant la direction axiale, entre la première paroi d'extrémité (103) et la deuxième paroi d'extrémité (105), ladite nervure longitudinale (113) assurant une liaison mécanique entre la première paroi d'extrémité (103), la deuxième paroi d'extrémité (105) et l'au moins une collerette transversale (109).

6. Entretoise (100) selon la revendication 5, comprenant une pluralité de nervures longitudinales (113) décalées angulairement entre elles autour de la direction axiale.

7. Entretoise (100) selon l'une quelconque des revendications 5 ou 6, dans laquelle les cavités externes (111) délimitées par la première paroi d'extrémité (103), la deuxième paroi d'extrémité (105), l'au moins une nervure longitudinale (113), et l'au moins une collerette transversale (109) contiennent au moins partiellement un isolant thermique.

8. Entretoise (100) selon l'une quelconque des revendications 1 à 7, dans laquelle la deuxième paroi d'extrémité (105) comprend au moins une lumière permettant la mise en place d'un organe de fixation (11) destiné à assurer la fixation de la deuxième paroi d'extrémité (105) avec l'élément de parement (5) externe.

9. Kit de fixation (1) adapté à la fixation d'un parement extérieur (3) sur un élément de construction externe d'un bâtiment où le parement extérieur (3) comprend un élément de parement (5) externe et un élément d'isolation (7) destiné à être positionné, après fixation par l'intermédiaire dudit kit de fixation (1), entre l'élément de parement (5) externe et l'élément de construction externe du bâtiment, ledit kit de fixation (1) comprenant une entretoise (100) selon l'une quelconque des revendications 1 à 8, et une tige de solidarisation (9) configurée pour s'insérer axialement dans le canal de guidage (107) et dans un orifice ménagé dans l'élément de construction externe du bâtiment, de manière à lier mécaniquement le parement extérieur (3) et l'élément de construction externe du bâtiment.

10. Kit de fixation (1) selon la revendication 9, comprenant au moins un organe de fixation (11) apte à fixer la deuxième paroi d'extrémité (105) de l'entretoise (100) avec l'élément de parement (5) externe.

11. Kit de fixation (1) selon l'une quelconque des revendications 9 ou 10, dans lequel la tige de solidarisation (9) comprend une première extrémité munie d'une cheville de maintien (30) ; le kit de fixation (1) étant apte à adopter une première configuration dans laquelle la cheville de maintien (30) coopère par simple emboîtement avec l'orifice ménagé dans l'élément de construction externe du bâtiment, et une deuxième configuration dans laquelle la tige de solidarisation (9) est solidaire de l'élément de construction externe du bâtiment par l'intermédiaire d'un adhésif.

12. Kit de fixation (1) selon la revendication 11, dans lequel la cheville de maintien (30) comprend un corps tubulaire (31) s'étendant suivant une direction longitudinale et présentant sur une surface externe d'au moins une fraction de la longueur du corps tubulaire (31), au moins une ailette transversale (33) s'étendant transversalement à la direction longitudinale et apte à interagir par frottement avec une paroi intérieure de l'orifice ménagé dans l'élément de construction externe du bâtiment.

13. Kit de fixation (1) selon la revendication 12, dans lequel l'au moins une ailette transversale (33) comprend une encoche (35) configurée pour permettre le passage d'un fluide de part et d'autre de ladite au moins une ailette transversale (33) à l'extérieur du corps tubulaire (31) de la cheville de maintien (30).

14. Kit de fixation (1) selon l'une quelconque des revendications 12 ou 13, dans lequel le corps tubulaire (31) de la cheville de maintien (30) comprend une portion d'extrémité d'insertion (37) présentant une forme tronconique configurée pour guider le passage de la tige de solidarisation (9) dans le corps tubulaire (31) de la cheville de maintien (30).

15. Kit de fixation (1) selon l'une quelconque des revendications 11 à 14, dans lequel la cheville de maintien (30) comprend au moins un canal de passage (39) configuré pour permettre le passage du fluide de l'intérieur vers l'extérieur de la cheville de maintien (30) et réciproquement.

16. Kit de fixation (1) selon l'une quelconque des revendications 11 à 15, dans lequel la tige de solidarisation (9) présente une deuxième extrémité opposée à la première extrémité, filetée et sur laquelle un écrou (15) est vissé jusqu'à prendre appui contre la deuxième paroi d'extrémité (105) de l'entretoise (100) de manière à appuyer l'élément d'isolation (7) sur l'élément de construction externe du bâtiment, le kit de fixation (1) étant dans la deuxième configuration.

## Patentansprüche

1. Abstandshalter (100) für ein Befestigungskit (1), das zum Befestigen einer Außenverkleidung (3) an einem Außenbauelement eines Gebäudes ausgelegt ist, wobei die Außenverkleidung (3) ein Außenverkleidungselement (5) und ein Isolierelement (7) umfasst, das dazu bestimmt ist, nach dem Befestigen zwischen dem Außenverkleidungselement (5) und dem Außenbauelement des Gebäudes positioniert zu werden, wobei der Abstandshalter (100) dazu bestimmt ist, durch die Dicke des Isolierelements (7) hindurchzugehen, und Folgendes umfasst:
- einen rohrförmigen Hauptkörper (101), der sich in axialer Richtung erstreckt,
- eine erste Endwand (103), die an einem ersten axialen Ende des Hauptkörpers (101) angeordnet und dazu bestimmt ist, dem Außenbauelement des Gebäudes zugewandt zu sein, wobei sich die erste Endwand (103) quer zur axialen Richtung erstreckt und eine Anlagefläche begrenzt, die dazu bestimmt ist, mit einer durch das Isolierelement (7) begrenzten Aussparung zusammenzuwirken,
- eine zweite Endwand (105), die an einem zweiten axialen Ende des Hauptkörpers (101), das dem ersten axialen Ende gegenüberliegt, angeordnet und dazu bestimmt ist, am Außenverkleidungselement (5) anzuliegen,
- einen Führungskanal (107), der sich innen entlang der axialen Richtung durch den Hauptkörper (101) erstreckt und auf der Höhe der ersten Endwand (103) und auf der Höhe der zweiten Endwand (105) in Richtung der Außenseite des Abstandshalters (100) mündet, wobei der Durchgang das Einführen einer Sicherungsstange (9) ermöglicht,
- mindestens einen quer verlaufenden Kragen (109), der sich quer zur axialen Richtung außerhalb des Hauptkörpers (101) an einer Stelle erstreckt, die sich zwischen der ersten Endwand (103) und der zweiten Endwand (105) befindet, wobei mindestens zwei äußere Hohlräume (111) im Verbund mit dem Hauptkörper (101) auf beiden Seiten des mindestens einen quer verlaufenden Kragens (109) begrenzt sind.

2. Abstandhalter (100) nach Anspruch 1, der eine Rotationsgeometrie um die axiale Richtung, insbesondere eine zylindrische oder kegelstumpfförmige Geometrie, aufweist.

3. Abstandhalter (100) nach einem der Ansprüche 1 oder 2, wobei sich der mindestens eine quer verlaufende Kragen (109) in einer Ebene erstreckt, die im Wesentlichen senkrecht zur axialen Richtung verläuft.

4. Abstandshalter (100) nach einem der Ansprüche 1 bis 3, wobei die Anzahl der quer verlaufenden Kragen (109) größer oder gleich 2 und insbesondere größer oder gleich 6 ist.

5. Abstandshalter (100) nach einem der Ansprüche 1 bis 4, der mindestens eine Längsrippe (113) umfasst, die sich außerhalb des Hauptkörpers (101) und entlang der axialen Richtung zwischen der ersten Endwand (103) und der zweiten Endwand (105) erstreckt, wobei die Längsrippe (113) eine mechanische Verbindung zwischen der ersten Endwand (103), der zweiten Endwand (105) und dem mindestens einen quer verlaufenden Kragen (109) gewährleistet.

6. Abstandshalter (100) nach Anspruch 5, der eine Vielzahl von Längsrippen (113) umfasst, die um die axiale Richtung winkelversetzt zueinander sind.

7. Abstandshalter (100) nach einem der Ansprüche 5 oder 6, wobei die äußeren Hohlräume (111) durch die erste Endwand (103), die zweite Endwand (105), die mindestens eine Längsrippe (113) und den mindestens einen quer verlaufenden Kragen (109) begrenzt sind, die zumindest teilweise eine Wärmeisolierung enthalten.

8. Abstandshalter (100) nach einem der Ansprüche 1 bis 7, wobei die zweite Endwand (105) mindestens ein Loch umfasst, das das Einsetzen eines Befestigungselements (11) ermöglicht, das dazu bestimmt ist, das Befestigen der zweiten Endwand (105) mit dem Außenverkleidungselement (5) zu gewährleisten.

9. Befestigungskit (1), das zum Befestigen einer Außenverkleidung (3) an einem Außenbauelement eines Gebäudes ausgelegt ist, wobei die Außenverkleidung (3) ein Außenbauelement (5) und ein Isolierelement (7) umfasst, das dazu bestimmt ist, nach dem Befestigen mittels des Befestigungskits (1) zwischen dem Außenverkleidungselement (5) und dem Außenbauelement des Gebäudes positioniert zu werden, wobei das Befestigungskit (1) einen Abstandhalter (100) nach einem der Ansprüche 1 bis 8 und eine Sicherungsstange (9) umfasst, die dazu konfiguriert ist, axial in den Führungskanal (107) und in eine im Außenbauelement des Gebäudes ausgebildete Öffnung eingeführt zu werden, um die Außenverkleidung (3) und das Außenbauelement des Gebäudes mechanisch zu verbinden.

10. Befestigungskit (1) nach Anspruch 9, das mindestens ein Befestigungselement (11) umfasst, das dazu geeignet ist, die zweite Endwand (105) des Abstandshalters (100) an dem Außenverkleidungselement (5) zu befestigen.

11. Befestigungskit (1) nach einem der Ansprüche 9 oder 10, wobei die Sicherungsstange (9) ein erstes Ende umfasst, das mit einem Haltestift (30) versehen ist; wobei das Befestigungskit (1) dazu geeignet ist, eine erste Konfiguration, in der der Haltestift (30) durch einfaches Einrasten mit der im Außenbauelement des Gebäudes ausgebildeten Öffnung zusammenwirkt, und eine zweite Konfiguration einzunehmen, in der die Sicherungsstange (9) mittels eines Klebers fest mit dem Außenbauelement des Gebäudes verbunden ist.

12. Befestigungskit (1) nach Anspruch 11, wobei der Haltestift (30) einen rohrförmigen Körper (31), der sich in Längsrichtung erstreckt und an einer Außenfläche mindestens einen Bruchteil der Länge des rohrförmigen Körpers (31) aufweist, und mindestens eine Querrippe (33) umfasst, die sich quer zur Längsrichtung erstreckt und dazu geeignet ist, durch Reibung mit einer Innenwand der im Außenbauelement des Gebäudes ausgebildeten Öffnung zusammenzuwirken.

13. Befestigungskit (1) nach Anspruch 12, wobei die mindestens eine Querrippe (33) eine Aussparung (35) umfasst, die dazu konfiguriert ist, den Durchgang eines Fluids auf beiden Seiten der mindestens einen Querrippe (33) außerhalb des rohrförmigen Körpers (31) des Haltestifts (30) zu ermöglichen.

14. Befestigungskit (1) nach einem der Ansprüche 12 oder 13, wobei der rohrförmige Körper (31) des Haltestifts (30) einen Einsteckendabschnitt (37) mit einer kegelstumpfförmigen Form umfasst, der dazu konfiguriert ist, den Durchgang der Sicherungsstange (9) im rohrförmigen Körper (31) des Haltestifts (30) zu führen.

15. Befestigungskit (1) nach einem der Ansprüche 11 bis 14, wobei der Haltestift (30) mindestens einen Durchgangskanal (39) umfasst, der dazu konfiguriert ist, den Durchgang des Fluids von innen nach außen am Haltestift (30) und umgekehrt zu ermöglichen.

16. Befestigungskit (1) nach einem der Ansprüche 11 bis 15, wobei die Sicherungsstange (9) ein zweites Ende aufweist, das dem ersten Ende gegenüberliegt, mit einem Gewinde versehen ist und auf das eine Mutter (15) bis zum Anschlag gegen die zweite Endwand (105) des Abstandshalters (100) aufgeschraubt ist, um das Isolierelement (7) an das Außenbauelement des Gebäudes zu drücken, wobei sich das Befestigungskit (1) in der zweiten Konfiguration befindet.

## Claims

1. A spacer (100) for a fastening kit (1) adapted for fastening an external facing (3) to an external construction element of a building where the external facing (3) comprises an outer facing element (5) and an insulation element (7) intended to be positioned, after fastening, between the outer facing element (5) and the outer construction element of the building, said spacer (100) being intended to pass through the thickness of the insulation element (7) and comprising:
- a tubular shaped main body (101) extending in an axial direction,
- a first end wall (103) arranged at a first axial end of the main body (101) and intended to be directed towards the outer construction element of the building, the first end wall (103) extending transversely to the axial direction and delimiting a support surface intended to cooperate with a notch delimited by the insulation element (7),
- a second end wall (105) arranged at a second axial end of the main body (101), opposite to the first axial end, and intended to bear against the outer facing element (5),
- a guide channel (107) extending internally in the axial direction through the main body (101) and opening outside the spacer (100) at the first end wall (103) and at the second end wall (105), the through passage allowing the insertion of a securing rod (9),
- at least one transverse flange (109) extending outside the main body (101) transversely to the axial direction, at a location located between the first end wall (103) and the second end wall (105), at least two outer cavities (111) being delimited, in combination with the main body (101), on either side of said at least one transverse flange (109).

2. The spacer (100) according to claim 1, having an axisymmetric geometry around the axial direction, in particular a cylindrical or frustoconical geometry.

3. The spacer (100) according to any one of claims 1 or 2, wherein said at least one transverse flange (109) extends in a plane substantially perpendicular to the axial direction.

4. The spacer (100) according to any one of claims 1 to 3, wherein the number of transverse flanges (109) is greater than or equal to 2, and in particular greater than or equal to 6.

5. The spacer (100) according to any one of claims 1 to 4, comprising at least one longitudinal rib (113) extending, outside the main body (101) and in the axial direction, between the first end wall (103) and the second end wall (105), said longitudinal rib (113) ensuring a mechanical connection between the first end wall (103), the second end wall (105) and the at least one transverse flange (109).

6. The spacer (100) according to claim 5, comprising a plurality of longitudinal ribs (113) angularly offset from one another around the axial direction.

7. The spacer (100) according to any one of claims 5 or 6, wherein the outer cavities (111) delimited by the first end wall (103), the second end wall (105), the at least one longitudinal rib (113), and the at least one transverse flange (109) contain at least partially one thermal insulator.

8. The spacer (100) according to any one of claims 1 to 7, wherein the second end wall (105) comprises at least one aperture allowing the setup of a fastening member (11) intended to ensure fastening of the second end wall (105) with the outer facing element (5).

9. A fastening kit (1) adapted for fastening an external facing (3) on an outer construction element of a building where the external facing (3) comprises an outer facing element (5) and an insulation element (7) intended to be positioned, after fastening via said fastening kit (1), between the outer facing element (5) and the outer construction element of the building, said fastening kit (1) comprising a spacer (100) according to any one of claims 1 to 8, and a securing rod (9) configured to be axially inserted into the guide channel (107) and into a hole formed in the outer construction element of the building, so as to mechanically connect the external facing (3) and the outer construction element of the building.

10. The fastening kit (1) according to claim 9, comprising at least one fastening member (11) capable of fastening the second end wall (105) of the spacer (100) to the outer facing element (5).

11. The fastening kit (1) according to any one of claims 9 or 10, wherein the securing rod (9) comprises a first end provided with a holding pin (30); the fastening kit (1) being capable of adopting a first configuration in which the holding pin (30) cooperates by simple interlocking with the hole formed in the outer construction element of the building, and a second configuration in which the securing rod (9) is secured to the outer construction element of the building via an adhesive.

12. The fastening kit (1) according to claim 11, wherein the holding pin (30) comprises a tubular body (31) extending in a longitudinal direction and having on an outer surface of at least one fraction of the length of the tubular body (31), at least one transverse fin (33) extending transversely to the longitudinal direction and capable of interacting by friction with an internal wall of the hole formed in the outer construction element of the building.

13. The fastening kit (1) according to claim 12, wherein the at least one transverse fin (33) comprises a notch (35) configured to allow passage of a fluid on either side of said at least one transverse fin (33) outside the tubular body (31) of the holding pin (30).

14. The fastening kit (1) according to any one of claims 12 or 13, wherein the tubular body (31) of the holding pin (30) comprises an insertion end portion (37) having a frustoconical shape configured to guide the passage of the securing rod (9) through the tubular body (31) of the holding pin (30).

15. The fastening kit (1) according to any one of claims 11 to 14, wherein the holding pin (30) comprises at least one passage channel (39) configured to allow passage of the fluid from the inside towards the outside of the holding pin (30) and vice versa.

16. The fastening kit (1) according to any one of claims 11 to 15, wherein the securing rod (9) has a second end opposite to the first end, threaded and on which a nut (15) is screwed until bearing against the second end wall (105) of the spacer (100) so as to press the insulation element (7) on the outer construction element of the building, the fastening kit (1) being in the second configuration.
